# EUROPEAN PATENT SPECIFICATION

(11) **EP 2 688 258 B1**
(45) Date of publication and mention of the grant of the patent: **06.04.2016**
(21) Application number: 12848769.1
(22) Date of filing: 10.12.2012
(51) Int. Cl.: H04L 12/947, G06F 13/42, G06F 1/18

(54) **SINGLE BOARD COMMUNICATION METHOD, SYSTEM AND SINGLE BOARD**
EINZELKARTEN-KOMMUNIKATIONSVERFAHREN, SYSTEM DAFÜR UND EINZELKARTE
PROCÉDÉ ET SYSTÈME DE COMMUNICATION À CARTE UNIQUE, ET CARTE UNIQUE CORRESPONDANTE

(30) Priority: 25.05.2012 CN 201210165487
(43) Date of publication of application: 22.01.2014
(73) Proprietor: Huawei Technologies Co., Ltd., Longgang District Shenzhen, Guangdong 518129 (CN)
(72) Inventor: CAO, Fayin, Shenzhen, Guangdong 518129 (CN); WEI, Qinghuan, Shenzhen, Guangdong 518129 (CN)
(74) Representative: Maiwald Patentanwalts GmbH
(86) International application number: PCT/CN2012/086276
(87) International publication number: WO 2013/174125

(56) References cited:
- WO-A1-2009/142632
- CN-A- 1 484 159
- CN-A- 101 329 556
- CN-A- 102 169 463
- CN-A- 102 273 178
- CN-A- 102 724 110
- JP-A- H05 289 778
- US-A1- 2007 250 648
- US-A1- 2012 072 626
- US-B1- 6 253 267

## Description

### TECHNICAL FIELD

The present invention relates to communication technologies, and in particular, to a board communication method and system, and a board.

### BACKGROUND

In the communication field, in order to manage, trace and repair a board or module in a communication product, a group of data needs to be defined to express necessary information about production, manufacturing, and so on, of the board or module. The group of data is generally called "electronic label", which is stored in a memory. As a storage chip that does not lose data even if power fails, an Electrically Erasable Programmable Read-Only Memory (Electrically Erasable Programmable Read-Only Memory, EEPROM for short) supports internal integrated circuit (Inter-Integrated Circuit, I²C for short) communication, and is in widespread use due to easy operation and cost-efficiency. An I²C is a master-slave bus. Each slave device connected to the bus can be set and identified by a host through a unique address, and the host may serve as a host sender or a host receiver. Boards are categorized into smart boards and non-smart boards; for a smart board, a controller in the board can manage the electronic label of the board through an I²C bus; for a non-smart board, the board is unable to manage its own electronic label, and its electronic label needs to be managed by a smart board in the system through an I²C bus. The address of an EEPROM generally includes 7 bits, in which 4 bits are a fixed address of a device and 3 bits are a device chip-select enable address. On a backplane, different boards can be connected into different slots. If multiple types of non-smart boards are connected, a smart board is required to manage electronic labels of such boards, but the EEPROM of each non-smart board has the same 4-bit fixed address of the device. Therefore, to identify electronic labels of different non-smart boards, different 3-bit device chip-select enable addresses need to be allocated to the non-smart boards.

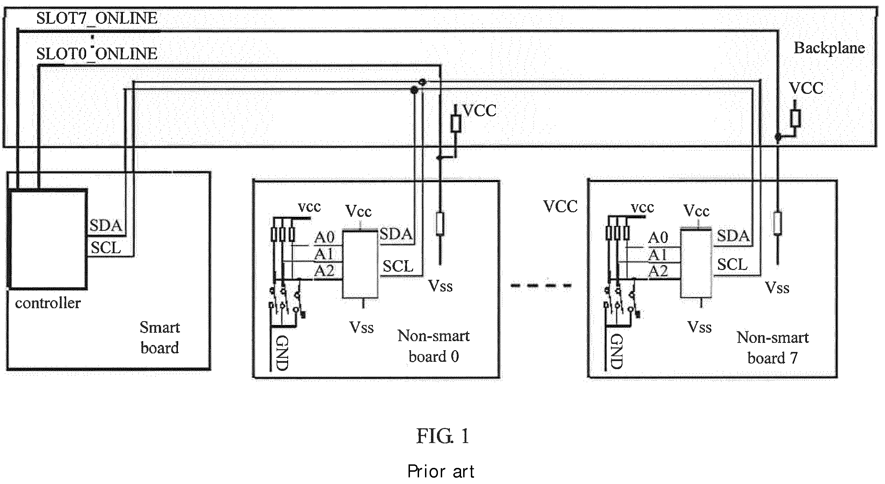

FIG. 1 is a schematic diagram of a connection between a backplane and each board in the prior art. As shown in FIG. 1, different non-smart boards are plugged into different slots in the backplane. According to different addresses corresponding to slots 0 to 7 that are fixed before the backplane is shipped out of factory, the device chip-select enable addresses A0, A1, and A2 of the EEPROMs in different types of non-smart boards are preset to addresses in the corresponding slots through a dual in-line package switch. WO 2009/142632 describes a multi-drop serial bus to connect a master device to a plurality of slave devices on a data line includes a voltage divider network, comprising divider resistors in series on the data line between slave devices, and a voltage sensing device, connected to the data line, configured to detect a voltage order of signals from the slave devices, indicating a position of connection of each slave device. US 2012/072626 describes an automatic addressing protocol for a shared bus. US 6253267 describes a hot-plug controller of PCI bus using single chip. CN 101329556 describes a stander used for an automatic control system. CN 102169463 describes a method for manufacturing information IIC bus-based method.

However, in the prior art, operators have to control the dual in-line package switch manually to set the device chip-select enable addresses of the EEPROMs, and the device chip-select enable addresses cannot be automatically identified and allocated.

### SUMMARY

The embodiments of the present invention provide a board communication method and system, and a board to implement automatic identification and allocation of device chip-select enable addresses of boards.

In a first aspect, an embodiment of the present invention provides a board, including a memory, a board in-position detection circuit, and a chip-select enable circuit, where:
the board in-position detection circuit is configured to connect to a master device through an in-position signal cable when the board is plugged into any slave device slot on a backplane so that the master device obtains an in-position signal of the board through the in-position signal cable, where the in-position signal is used to indicate that the board is in an online state;
the chip-select enable circuit is configured to obtain an address signal corresponding to the slave device slot through an address signal cable when the board is in an online state; and
the memory is configured to configure a device chip-select enable address of the board according to the address signal corresponding to the slave device slot and obtained by the chip-select enable circuit; wherein the device chip-select enable address is used for the board communicating with the master device through a communication bus.

In another aspect, an embodiment of the present invention provides another board, including a detecting module, an address obtaining module, and a communication module, where:
the detecting module is configured to obtain an in-position signal of a slave device through an in-position signal cable of the slave device plugged in a slave device slot on a backplane, where the in-position signal is used to indicate that the slave device is in an online state;
the address obtaining module is configured to obtain a device chip-select enable address corresponding to an online slave device through the in-position signal cable of the slave device; and
the communication module is configured to communicate with the slave device according to the device chip-select enable address by using a communication bus connected to a memory of the slave device.

In another aspect, an embodiment of the present invention provides a board communication system, including a backplane, a master device, and multiple slave devices, where the master device is plugged into a master device slot on the backplane, and the multiple slave devices are plugged into multiple slave device slots on the backplane, respectively;

The master device is configured to: obtain an in-position signal of each slave device through a respective in-position signal cable of the each slave device, where the in-position signal indicates that the slave device is in an online state; obtain a device chip-select enable address corresponding to each online slave device through a respective in-position signal cable of the each slave device when the each slave is in an online state; and communicate with each online slave device according to the device chip-select enable address corresponding to each online slave device by using a communication bus connected to a memory of each online slave device; and

The slave device is connected to the master device through the in-position signal cable when plugged into a slave device slot on the backplane so that the master device obtains the in-position signal of the slave device through the in-position signal cable.

In another aspect, an embodiment of the present invention provides a board communication method, including:
obtaining, through an address signal cable, an address signal corresponding to a slot that accommodates a slave device after the slave device is plugged into a slave device slot on a backplane; and
configuring a device chip-select enable address of the slave device according to the address signal, and communicating with a master device according to the device chip-select enable address and through a communication bus.

In another aspect, an embodiment of the present invention provides a board communication method, including:
Obtaining, by a master device, an in-position signal of each slave device through a respective in-position signal cable, where the in-position signal is used to indicate that a slave device is in an online state; wherein a master device slot and multiple slave device slots are set on a backplane, wherein the master device slot is used to accommodate the master device s, and the slave device slots are used to accommodate slave devices, each slave device plugged on the backplane is connected to the master device through a respective in-position signal cable;
obtaining, by the master device, a device chip-select enable address corresponding to each online slave device through a respective in-position signal cable; and
communicating, by the master device, with each online slave device according to each device chip-select enable address by using a communication bus connected to a memory in the slave device.

The technical effects of the embodiments of the present invention are: A master device obtains an in-position signal of a slave device through an in-position signal cable, a chip-select enable circuit in the slave device obtains an address signal corresponding to a slave device slot through an address signal cable, and a memory in the slave device configures a device chip-select enable address of the slave device according to the address signal, thereby implementing automatic identification and allocation of the device chip-select enable address of the slave device without participation of an operator, and improving convenience of device maintenance and installation.

### BRIEF DESCRIPTION OF DRAWINGS

To describe the technical solutions in the embodiments of the present invention or in the prior art, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings.
FIG. 1 is a schematic diagram of a connection between a backplane and each board in the prior art;
FIG. 2 is a schematic structural diagram of a board according to a first embodiment of the present invention;
FIG. 3 is a schematic structural diagram of a board according to a second embodiment of the present invention;
FIG. 4 is a schematic structural diagram of a board communication system according to a first embodiment of the present invention;
FIG. 5 is a schematic structural diagram of a board communication system according to a second embodiment of the present invention;
FIG. 6 is a flowchart of a board communication method according to a first embodiment of the present invention; and
FIG. 7 is a flowchart of a board communication method according to a second embodiment of the present invention.

### DESCRIPTION OF EMBODIMENTS

To make the objectives, technical solutions, and advantages of the embodiments of the present invention more comprehensible, the following describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention shall fall within the protection scope of the present invention.

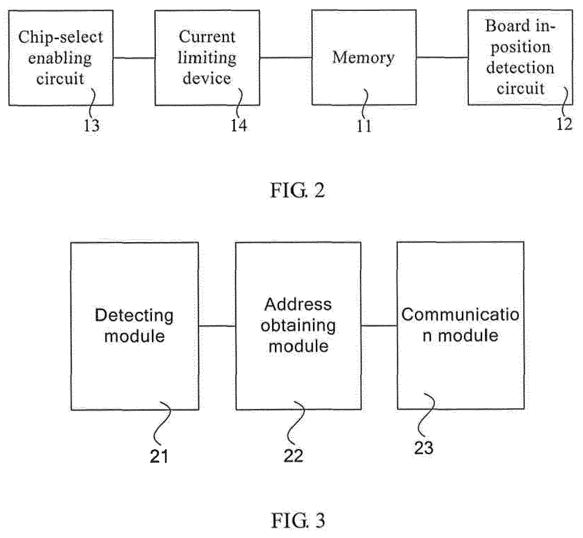

FIG. 2 is a schematic structural diagram of a board according to a first embodiment of the present invention. As shown in FIG. 2, the embodiment provides a board. The board is specifically a slave device plugged onto a backplane, where the slave device may be a non-smart board, for example. In the embodiment, multiple slots for accommodating boards may be set on the backplane, and may specifically include a master device slot and multiple slave device slots, where the master device slot is used to accommodate a master device such as a smart board, and the slave device slots are used to accommodate slave devices such as non-smart boards. The board provided in the embodiment may be specifically plugged into any slave device slot on the backplane, and the board may specifically include a memory 11, a board in-position detection circuit 12, and a chip-select enable circuit 13. The chip-select enable circuit 13 is connected to the memory 11, the memory 11 is connected to the master device through a communication bus, and the board in-position detection circuit 12 is connected to the master device through an in-position signal cable. Specifically, the memory 11 in the embodiment may be specifically an EEPROM, but is not limited to an EEPROM. In the embodiment, the board in-position detection circuit 12 is configured to connect to the master device through the in-position signal cable when the board is plugged into a slave device slot so that the master device obtains the in-position signal of the board through the in-position signal cable; the master device obtains the in-position signal of the board through the in-position signal cable, where the in-position signal is used to identify a current online state of the board, that is, whether the board is online, and therefore, the master device can detect whether the board is online. If the master device detects no in-position signal through an in-position signal cable, it indicates that no slave device is plugged in the slave device slot connected to the in-position signal cable or that the plugged slave device is currently not online. If the master device detects an in-position signal through an in-position signal cable, it indicates that the in-position signal is "active", a slave device is plugged in the slave device slot connected to the in-position signal cable, and the slave device is online, and therefore, the chip-select address of the slave device can be identified automatically. The chip-select enable circuit 13 is configured to obtain an address signal corresponding to the slave device slot through an address signal cable when the board is in an online state (that is, the in-position signal of the board is "active"). In the embodiment, an address signal and an in-position signal corresponding to each slave device slot are set on the each slave device slot of the backplane. That is, in a hardware design process, a slot number of each slave device slot is bound to the address signal corresponding to the slot. When the board is plugged into a slave device slot, if the in-position signal of the board is identified as "active", the chip-select enable circuit 13 on the board may be connected to the backplane through the address signal cable, and therefore, the address signal corresponding to the slave device slot bound to the slot number can be obtained directly through the address signal cable. The memory 11 is configured to obtain the address signal corresponding to the slave device slot from the chip-select enable circuit 12, and configure the device chip-select enable address of the board automatically according to the address signal. In the embodiment, the output end of the chip-select enable circuit 13 is connected to the address input end of the memory 11, and the device chip-select enable address of the board is configured according to the address signal obtained by the chip-select enable circuit 13, that is, the address corresponding to the slave device slot which the board is plugged into is configured as the device chip-select enable address of the board. After the address is configured, the board can communicate with the master device according to the device chip-select enable address, and specifically, communicate with the master device through a communication bus. The communication bus in the embodiment may be specifically an I²C bus that connects the master device to the slave device.

Further, the board provided in the embodiment may include a current limiting device 14, where the current limiting device 14 is set between the chip-select enable circuit 12 and the memory 11 and is configured to perform current limitation for the memory 11. The current limiting device 14 may be specifically a resistor with large resistance or an overcurrent protection chip or an interface driver. The current limiting device 14 is configured to prevent damage or impact caused to the memory 11 by a large current generated in the circuit when the board is hot-swapped.

The board is provided in the embodiment, and the board is plugged in any slave device slot on the backplane; by using a board in-position detection circuit that is connected to the in-position signal cable and is in the board, the master device obtains an in-position signal of the board; when the in-position signal of the slave device is "active", the chip-select enable circuit obtains the address signal corresponding to the slave device slot through the address signal cable, and configures the device chip-select enable address of the board according to the address signal, thereby implementing automatic identification and allocation of the device chip-select enable address of the board without participation of an operator, and improving convenience of device maintenance and installation.

FIG. 3 is a schematic structural diagram of a board according to a second embodiment of the present invention. As shown in FIG. 3, the embodiment provides a board. The board is specifically a master device plugged onto a backplane, where the master device may be a smart board, for example. In the embodiment, multiple slots for accommodating boards may be set on the backplane, and may specifically include a master device slot and multiple slave device slots, where the master device slot is used to accommodate a master device such as a smart board, and the slave device slots are used to accommodate slave devices such as non-smart boards. The board provided in the embodiment is specifically plugged into a master device slot on the backplane, and the board may specifically include a detecting module 21, an address obtaining module 22, and a communication module 23. The detecting module 21 is configured to obtain an in-position signal of each slave device through a respective in-position signal cable. In the embodiment, each slave device plugged on the backplane is connected to the master device through a respective in-position signal cable, and the detecting module 21 detects whether each slave device is in an online state through the respective in-position signal cable. The address obtaining module 22 is configured to obtain a device chip-select enable address corresponding to each online slave device through a respective in-position signal cable. In the embodiment, when the detecting module 21 in the master device detects that a slave device is online, the address obtaining module 22 can, through the in-position signal cable connected to the slave device, obtain a device chip-select enable address corresponding to a slot that accommodates the slave device, that is, obtain the device chip-select enable address of the slave device. The communication module 23 communicates with each online slave device according to each device chip-select enable address by using a communication bus connected to a memory in the online slave device. After a device chip-select enable address of each online slave device is obtained, the master device may communicate with the online slave device through the communication module 23, and specifically, may communicate with the slave device through a communication bus connecting the master device to the slave device.

The board is provided in the embodiment, and the board is plugged in a master device slot on the backplane; a detecting module in a controller in the board obtains an in-position signal of the slave device through an in-position signal cable, so as to obtain each slave device that is in an online state; the address obtaining module further obtains a device chip-select enable address of each online slave device through a respective in-position signal cable, thereby implementing automatic identification and allocation of the device chip-select enable address of the board without participation of an operator, and improving convenience of device maintenance and installation.

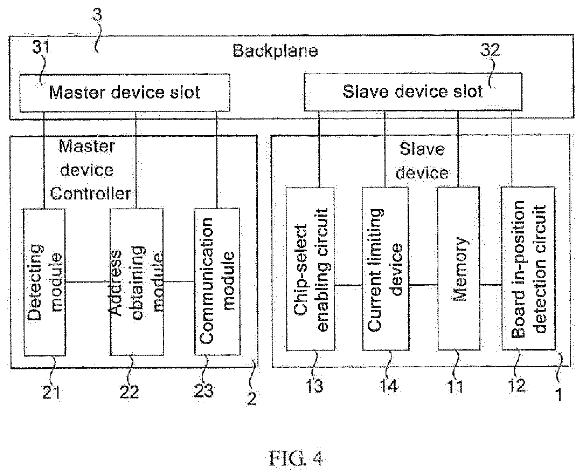

FIG. 4 is a schematic structural diagram of a board communication system according to a first embodiment of the present invention. As shown in FIG. 4, the embodiment provides a board communication system. The board communication system may specifically include a backplane 3, a master device 2, and multiple slave devices 1 (only one slave device is illustrated in FIG. 4). Multiple slots for accommodating boards may be set on the backplane 3, and may specifically include a master device slot 31 and multiple slave device slots 32, where the master device slot 31 is configured to accommodate a master device 2, and the slave device slots 32 are configured to accommodate slave devices 1. In the embodiment, the master device 2 is plugged into the master device slot 31 on the backplane 3, and one slave device 1 is plugged into any slave device slot 32 on the backplane 3. An address signal corresponding to each slave device slot 32 is set on the backplane 3 in the embodiment. That is, on the backplane 3, a corresponding device chip-select enable address is set for each slave device slot 32. Each slave device slot 32 in the embodiment corresponds to a fixed chip-select enable address of a device. No matter which slave device is plugged into the slave device slot 32, the address of the slave device is automatically configured as the device chip-select enable address.

The master device 2 in the embodiment may be specifically the board shown in FIG. 3. That is, the master device 2 in the embodiment specifically includes a detecting module 21, an address obtaining module 22, and a communication module 23. The detecting module 21 is configured to obtain an in-position signal of each slave device 1 through each in-position signal cable. The address obtaining module 22 is configured to obtain a device chip-select enable address corresponding to each online slave device through a respective in-position signal cable. The communication module 23 communicates with each online slave device according to each device chip-select enable address by using a communication bus connected to a memory in the online slave device.

The slave device 1 in the embodiment may specifically include the board shown in FIG. 2. That is, the slave device in the embodiment may specifically include a memory 11, a board in-position detection circuit 12, and a chip-select enable circuit 13. The chip-select enable circuit 13 is connected to the memory 11, and the board in-position detection circuit 12 is connected to the master device 2 through an in-position signal cable. The board in-position detection circuit 12 is connected to the master device 2 through the in-position signal cable when the slave device 1 is plugged into a slave device slot 32, so that the detecting module 211 in the master device 2 obtains the in-position signal of the slave device 1 through the in-position signal cable. The chip-select enable circuit 13 is configured to obtain an address signal corresponding to the slave device slot 32 through an address signal cable when the in-position signal of the board is "active". The memory 11 is configured to configure a device chip-select enable address of the slave device 1 according to the address signal corresponding to the slave device slot 32 and obtained by the chip-select enable circuit 13, and communicate with the master device 2 through a communication bus. Further, the slave device may further include a current limiting device 14, where the current limiting device 14 is set between the chip-select enable circuit 12 and the memory 11 and is configured to perform current limitation for the memory 11.

The board communication system is provided in the embodiment of the present invention, and the board communication system includes a backplane, a master device, and slave devices. The master device obtains an in-position signal of a slave device through an in-position signal cable; when the in-position signal of the slave device is "active", a chip-select enable circuit in the slave device obtains an address signal corresponding to a slave device slot through an address signal cable, and a memory in the slave device configures a device chip-select enable address of the slave device according to the address signal, thereby implementing automatic identification and allocation of the device chip-select enable address of the slave device without participation of an operator, and improving convenience of device maintenance and installation.

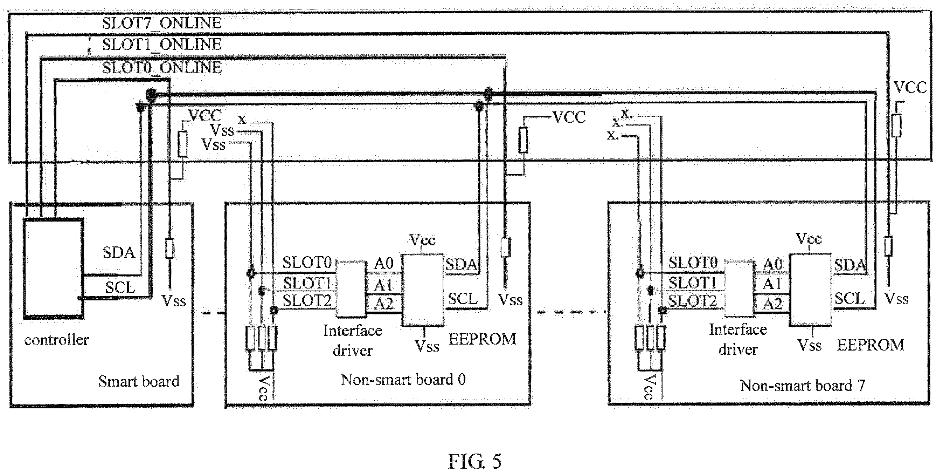

FIG. 5 is a schematic structural diagram of a board communication system according to a second embodiment of the present invention. As shown in FIG. 5, a specific board communication system is provided in the embodiment. A master device in the board communication system may be specifically a smart board, and multiple slave devices may be specifically non-smart board 1, non-smart board 2, ..., non-smart board 7. A memory in the slave device in the embodiment is specifically an EEPROM, a current limiting device is specifically an interface driver, and a controller in the master device is specifically a controller shown in the FIG. 5; Vss and Vcc that are connected to an in-position signal cable in a slave device in FIG. 5, and a pull-up resistor and a pull-down resistor that are connected to Vss and Vcc, make up an in-position detection circuit of the board; and a chip-select enable circuit is specifically implemented by using a pull-down resistor. SLOT0_ONLINE, SLOT1_ONLINE, ..., SLOT7_ONLINE in FIG. 5 are in-position signal cables, are connected to Vss of the smart board and Vcc of the non-smart board 1, non-smart board 2, ..., non-smart board 7, respectively, and are all connected to Vcc of a backplane. The communication bus in FIG. 5 is an I²C bus, is connected to a serial data line (Serial Data Line, SDA for short) and a serial clock (Serial Clock, SCL for short) of the controller in the smart board, the SDA and the SCL in the non-smart board 1, the SDA and the SCL in the non-smart board 2, ..., and the SDA and the SCL in the non-smart board 7. An address signal corresponding to a slot that accommodates each non-smart board is set in the backplane, that is, "Vss,Vss,x", ..., "x,x,x" in FIG. 5, where Vss may represent a binary 0, x may represent a binary 1, and therefore, the address signal corresponding to the slot that accommodates the non-smart board 1 in FIG. 5 is composed of 0, 0, and 1, and the device chip-select enable address corresponding to the address signal is "001". As revealed in FIG. 5, after the non-smart board 1 is plugged into the slot, the device chip-select enable address of the non-smart board 1 may be configured to "001" automatically; if another non-smart board such as the non-smart board 2 is plugged into this slot, its device chip-select enable address may also be configured to "001" automatically, regardless of the type of the non-smart board plugged in the slot.

In the embodiment, the smart board may use the in-position signal cables such as SLOT0_ONLINE, SLOT1_ONLINE, ..., SLOT7_ONLINE to detect whether the non-smart boards plugged in the slots in the backplane are online, respectively, and may identify whether a non-smart board is currently online according to an in-position signal of the non-smart board obtained through an in-position signal cable. For example, when the in-position signal obtained by the smart board through SLOT1_ONLINE is 1, it indicates that the non-smart board 1 is currently online. Afterward, the smart board can communicate with the online non-smart board through the I²C bus.

In the embodiment, different types of non-smart boards may be plugged in different slots of the backplane at random, without the need of specifying a fixed slot for each non-smart board. Moreover, in the embodiment, multiple non-smart boards of the same type may be plugged into different slots, respectively, and the smart board can still be identified even through the non-smart boards are of the same type. The embodiment solves the issue of automatically allocating electronic label addresses of non-smart boards, and the solution is simple and reliable.

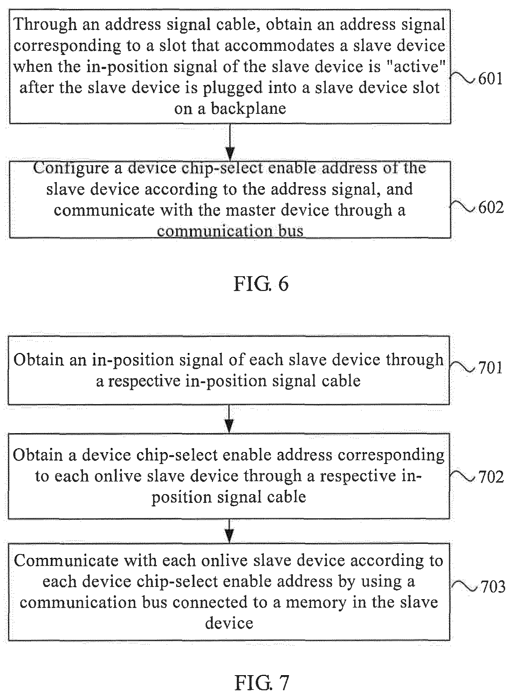

FIG. 6 is a flowchart of a board communication method according to a first embodiment of the present invention. As shown in FIG. 6, this embodiment provides a board communication method. This embodiment describes the technical solution of the present invention from the perspective of a slave device. The board communication method provided in this embodiment may include the following steps:
Step 601: Through an address signal cable, obtain an address signal corresponding to a slot that accommodates a slave device when the in-position signal of the slave device is "active" after the slave device is plugged into a slave device slot on a backplane.

In the embodiment, a master device is plugged into a master device slot on the backplane, and a slave device is plugged into any slave device slot on the backplane. After a system subrack is powered on, the master device performs polling to detect whether a slave device is online, and specifically, obtains an online signal of the slave device through an in-position signal cable. In the embodiment, the slave device is connected to the master device through the in-position signal cable, and whether the slave device is online is detected through the in-position signal cable. As shown in FIG. 5, it is assumed that the slave device is a non-smart board 1, and is connected to a smart board through an in-position signal cable SLOT1_ONLINE, and the smart board obtains an in-position signal of the non-smart board 1 through SLOT1_ONLINE to determine whether the non-smart board 1 is in position.

In this step, through an address signal cable, the slave device obtains an address signal corresponding to a slot that accommodates the slave device, when the in-position signal of the slave device is "active". In the embodiment, an address signal corresponding to each slave device slot is set on each slave device slot of the backplane; when the slave device is plugged into a slave device slot, the slave device can be connected to the backplane through the address signal cable, to obtain the address signal corresponding to the slave device slot through the address signal cable. Still referring to FIG. 5, the non-smart board 1 is connected to the backplane through the address signal cable, to obtain the address signal "Vss,Vss,x" corresponding to the slave device slot which the non-smart board is plugged into.

Step 602: Configure a device chip-select enable address of the slave device according to the address signal, and communicate with the master device through a communication bus.

After obtaining the address signal corresponding to the slave device, the slave device configures its own device chip-select enable address according to the address signal, that is, the slave device configures the address corresponding to the address signal as its own device chip-select enable address. As shown in FIG. 5, the non-smart board 1 obtains the address signal "Vss,Vss,x" corresponding to the slave device slot which the non-smart board is plugged into, and the address signal is input into address input ends A2, A1, and A0 of an EEPROM through an interface driver in the non-smart board 1. That is, the signals "0", "0", and "1" are input into the address input ends A2, A1, and A0 of the EEPROM, respectively, and therefore, the device chip-select enable address of the non-smart board 1 is configured to "001". The device chip-select enable address, which is configured to "001", is the address corresponding to the slave device slot 1. In the embodiment, a device chip-select enable address is bound to a slot number. No matter which slave device is plugged into the slot, the address corresponding to this slot is automatically configured as the device chip-select enable address of the slave device, thereby implementing automatic identification and allocation of the device chip-select enable address of the slave device. After the address is configured, the slave device can communicate with the master device, and specifically, communicate with the master device through a communication bus. The communication bus in the embodiment may specifically be an I²C bus that connects the master device to the slave device.

In the board communication method provided in the embodiment, by using a board in-position detection circuit that is connected to an in-position signal cable and is in the board, the master device obtains an in-position signal of the board; when the in-position signal of the slave device is "active", the slave device obtains the address signal corresponding to the slave device slot through the address signal cable, and configures the device chip-select enable address of the slave device according to the address signal, thereby implementing automatic identification and allocation of the device chip-select enable address of the slave device without participation of an operator, and improving convenience of device maintenance and installation.

FIG. 7 is a flowchart of a board communication method according to a second embodiment of the present invention. As shown in FIG. 7, this embodiment provides a board communication method. This embodiment describes the technical solution of the present invention from the perspective of a master device. The board communication method provided in this embodiment may include the following steps:
Step 701: Obtain an in-position signal of each slave device through a respective in-position signal cable.

In the embodiment, multiple slots for accommodating boards may be set on a backplane, and may specifically include a master device slot and multiple slave device slots, where the master device slot is used to accommodate a master device such as a smart board, and the slave device slots are used to accommodate slave devices such as non-smart boards. In this step, the master device obtains an in-position signal of each slave device through a respective in-position signal cable connected to the slave device. In the embodiment, each slave device plugged on the backplane is connected to the master device through a respective in-position signal cable, and the master device detects whether each slave device is online by using an in-position signal cable connected to the slave device.

Step 702: Obtain a device chip-select enable address corresponding to each online slave device through a respective in-position signal cable.

In this step, the master device obtains a device chip-select enable address corresponding to each online slave device through a respective in-position signal cable. In the embodiment, when the master device detects that a slave device is online, the master device further obtains the device chip-select enable address of the slave device. Specifically, the master device may obtain the device chip-select enable address corresponding to the online slave device through the in-position signal cable connected to the slave device. The obtained device chip-select enable address is the device chip-select enable address corresponding to the slave device slot which the slave device is plugged into, and therefore, the slave device can be plugged into any slave device slot on the backplane, and the device chip-select enable address corresponding to the slave device slot can be allocated to the slave device automatically.

Step 703: Communicate with each online slave device according to each device chip-select enable address by using a communication bus connected to a memory in the slave device.

In this step, the master device communicates with each online slave device according to each device chip-select enable address by using the communication bus connected to the memory in the online slave device. After a device chip-select enable address is allocated to each online slave device, the master device may communicate with the online slave device, and specifically, may communicate with the slave device through a communication bus that connects the master device to the slave device.

In the board communication method provided in the embodiment, by using a board in-position detection circuit that is connected to the in-position signal cable and is in the board, the master device obtains an in-position signal of the board; the chip-select enable circuit in the slave device obtains an address signal corresponding to a slave device slot through an address signal cable, and the memory in the slave device configures the device chip-select enable address of the slave device according to the address signal, thereby implementing automatic identification and allocation of the device chip-select enable address of the slave device without participation of an operator, and improving convenience of device maintenance and installation.

Persons of ordinary skill in the art may understand that all or a part of the steps of the method embodiments may be implemented by a program instructing relevant hardware. The foregoing program may be stored in a computer readable storage medium. When the program is run, the steps of the forgoing methods in the embodiments are performed. The storage medium includes any medium that is capable of storing program codes, such as a ROM, a RAM, a magnetic disk, or an optical disk.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, without departing from the scope of the technical solutions of the embodiments of the present invention.

## Claims

1. A board, comprising a memory (11), a board in-position detection circuit (12), and a chip-select enable circuit (13), **characterized in that** the board in-position detection circuit (12) is configured to connect to a master device through an in-position signal cable when the board is plugged into any slave device slot (32) on a backplane (3), so that the master device obtains an in-position signal of the board through the in-position signal cable, wherein the in-position signal is used to indicate an online state of the board, and the slave device slot is connected to the in-position signal cable;
the chip-select enable circuit (13) is configured to obtain an address signal corresponding to the slave device slot (32) through an address signal cable when the board is in the online state; wherein the slot number of the slave device slot is bound to the address signal corresponding to the slot; the chip-select enable circuit is connected to the backplane through the address signal cable and the address signal corresponding to the slave device slot bound to the slot number is obtained through the address signal cable when the board is plugged into the slave device slot and the in-position signal is "active"; and
the memory (11) is configured to configure a device chip-select enable address of the board according to the address signal corresponding to the slave device slot (32) and obtained by the chip-select enable circuit (13); wherein the device chip-select enable address is used for the board communicating with the master device through a communication bus; the output end of the chip-select enable circuit is connected to the address input end of the memory, and the address, corresponding to the slave device slot which the board is plugged into, is configured as the device chip-select enable address of the board.

2. The board according to claim 1, further comprising:
a current limiting device (14), wherein the current limiting device (14) is set between the chip-select enable circuit (13) and
the memory (11) and is configured to perform current limitation for the memory.

3. The board according to claim 1 or 2, wherein:
the memory is an electrically erasable programmable read-only memory EEPROM, and the communication bus is an internal integrated circuit I²C bus.

4. A board communication system, comprising a backplane (3), a master device (2) plugged into a master device slot (31) on the backplane, and multiple slave devices (1), according to any one of claims 1 to 3, plugged one each into multiple slave device slots (32) on the backplane, respectively.

5. A board communication method, **characterized in that** the method comprises:
obtaining (601), through an address signal cable, an address signal corresponding to a slave device slot that accommodates a slave device after the slave device is plugged into the slave device slot on a backplane, wherein the slot number of the slave device slot is bound to the address signal corresponding to the slot, and the address signal corresponding to the slave device slot is obtained through the address signal cable when the in-position signal of the slave device is "active" after the slave device is plugged into the slave device slot; and
configuring (602) a device chip-select enable address of the slave device according to the address signal, and communicating through a communication bus with a master device according to the device chip-select enable address; wherein the address corresponding to the slave device slot which the slave device is plugged into is configured as the device chip-select enable address.

## Patentansprüche

1. Karte, die einen Speicher (11), eine Karte-in-Position-Detektionsschaltung (12) und eine Chipauswahl-Freigabeschaltung (13) umfasst, **dadurch gekennzeichnet, dass** die Karte-in-Position-Detektionsschaltung (12) dafür ausgelegt ist, sich mittels eines In-Position-Signalkabels mit einer Master-Vorrichtung zu verbinden, wenn die Karte in einen beliebigen Slave-Vorrichtungssteckplatz (32) auf einer Rückwandplatine (3) eingesteckt wird, so dass die Master-Vorrichtung ein In-Position-Signal der Karte mittels des In-Position-Signalkabels erhält, wobei mit dem In-Position-Signal ein Online-Zustand der Karte angegeben wird und der Slave-Vorrichtungssteckplatz mit dem In-Position-Signalkabel verbunden ist;
die Chipauswahl-Freigabeschaltung (13) dafür ausgelegt ist, mittels eines Adresssignalkabels ein dem Slave-Vorrichtungssteckplatz (32) entsprechendes Adresssignal zu erhalten, wenn sich die Karte in dem Online-Zustand befindet; wobei die Steckplatznummer des Slave-Vorrichtungssteckplatzes an das dem Steckplatz entsprechende Adresssignal gebunden ist; die Chipauswahl-Freigabeschaltung mittels des Adresssignalkabels mit der Rückwandplatine verbunden ist und das Adresssignal, das dem Slave-Vorrichtungssteckplatz entspricht, der mit der Steckplatznummer gebunden ist, mittels des Adresssignalkabels erhalten wird, wenn die Karte in den Slave-Vorrichtungssteckplatz eingesteckt wird und das In-Position-Signal "aktiv" ist; und der Speicher (11) dafür ausgelegt ist, eine Vorrichtungs-Chipauswahlfreigabeadresse der Karte gemäß dem Adresssignal zu konfigurieren, das dem Slave-Vorrichtungssteckplatz (32) entspricht und durch die Chipauswahl-Freigabeschaltung (13) erhalten wird; wobei die Vorrichtungs-Chipauswahlfreigabeadresse für die Karte verwendet wird, die mittels eines Kommunikationsbusses mit der Master-Vorrichtung kommuniziert; das Ausgangsende der Chipauswahlfreigabeschaltung mit dem Adresseneingangsende des Speichers verbunden ist und die Adresse, die dem Slave-Vorrichtungssteckplatz entspricht, in den die Karte eingesteckt ist, als die Vorrichtungs-Chipauswahlfreigabeadresse der Karte konfiguriert ist.

2. Karte nach Anspruch 1, ferner umfassend:
eine Strombegrenzungsvorrichtung (14), wobei die Strombegrenzungsvorrichtung (14) zwischen der Chipauswahl-Freigabeschaltung (13) und dem Speicher (11) angeordnet ist und dafür ausgelegt ist, Strombegrenzung für den Speicher durchzuführen.

3. Karte nach Anspruch 1 oder 2, wobei
der Speicher ein elektrisch löschbarer programmierbarer Nurlesespeicher EEPROM ist und der Kommunikationsbus ein interner I²C-Bus integrierter Schaltungen ist.

4. Kartenkommunikationssystem, das eine Rückwandplatine (3), eine in einen Master-Vorrichtungssteckplatz (31) auf der Rückwandplatine eingesteckte Master-Vorrichtung (2) und mehrere Slave-Vorrichtungen (1) nach einem der Ansprüche 1 bis 3 umfasst, die jeweils einzeln in mehrere Slave-Vorrichtungssteckplätze (32) auf der Rückwandplatine eingesteckt sind.

5. Kartenkommunikationsverfahren, **dadurch gekennzeichnet, dass** das Verfahren Folgendes umfasst:
Erhalten (601) eines Adresssignals, das einem Slave-Vorrichtungssteckplatz entspricht, der eine Slave-Vorrichtung aufnimmt, mittels eines Adresssignalkabels, nachdem die Slave-Vorrichtung in den Slave-Vorrichtungssteckplatz auf einer Rückwandplatine eingesteckt wird, wobei die Steckplatznummer des Slave-Vorrichtungssteckplatzes an das Adresssignal gebunden ist, das dem Steckplatz entspricht, und das Adresssignal, das dem Slave-Vorrichtungssteckplatz entspricht, mittels des Adresssignalkabels erhalten wird, wenn das In-Position-Signal der Slave-Vorrichtung "aktiv" ist, nachdem die Slave-Vorrichtung in den Slave-Vorrichtungssteckplatz eingesteckt wird; und
Konfigurieren (602) einer Vorrichtungs-Chipauswahlfreigabeadresse der Slave-Vorrichtung gemäß dem Adresssignal und Kommunizieren mittels eines Kommunikationsbusses mit einer Master-Vorrichtung gemäß der Vorrichtungs-Chipauswahlfreigabeadresse; wobei die Adresse, die dem Slave-Vorrichtungssteckplatz entspricht, in den die Slave-Vorrichtung eingesteckt ist, als die Vorrichtungs-Chipauswahlfreigabeadresse konfiguriert ist.

## Revendications

1. Carte, comprenant une mémoire (11), un circuit de détection de carte en position (12), et un circuit de validation de sélection de puce (13), **caractérisée en ce que** le circuit de détection de carte en position (12) est configuré pour se connecter à un dispositif maître par l'intermédiaire d'un câble de signal en position lorsque la carte est branchée dans une fente quelconque de dispositif esclave (32) sur un fond de panier (3), de manière à ce que le dispositif maître obtienne un signal en position de la carte par l'intermédiaire du câble de signal en position, où le signal en position est utilisé pour indiquer un état en ligne de la carte, et la fente de dispositif esclave est connectée au câble de signal en position ;
le circuit de validation de sélection de puce (13) est configuré pour obtenir un signal d'adresse correspondant à la fente de dispositif esclave (32) par l'intermédiaire d'un câble de signal d'adresse lorsque la carte est dans l'état en ligne ;
où le numéro de fente de la fente de dispositif esclave est lié au signal d'adresse correspondant à la fente ; le circuit de validation de sélection de puce est connecté au fond de panier par l'intermédiaire du câble de signal d'adresse et le signal d'adresse, correspondant à la fente de dispositif esclave liée au numéro de fente, est obtenu par l'intermédiaire du câble de signal d'adresse lorsque la carte est branchée dans la fente de dispositif esclave et le signal en position est « actif » ; et
la mémoire (11) est configurée pour configurer une adresse de validation de sélection de puce de dispositif de la carte conformément au signal d'adresse correspondant à la fente de dispositif esclave (32) et obtenu par le circuit de validation de sélection de puce (13) ; où l'adresse de validation de sélection de puce de dispositif est utilisée pour la carte communiquant avec le dispositif maître par l'intermédiaire d'un bus de communication ; l'extrémité de sortie du circuit de validation de sélection de puce est connectée à l'extrémité d'entrée d'adresse de la mémoire, et l'adresse, correspondant à la fente de dispositif esclave à laquelle la carte est branchée, est configurée comme adresse de validation de sélection de puce du dispositif de la carte.

2. Carte selon la revendication 1, comprenant en outre :
un dispositif de limitation de courant (14), dans lequel le dispositif de limitation de courant (14) est fixé entre le circuit de validation de sélection de puce (13) et la mémoire (11) et est configuré pour procéder à une limitation de courant pour la mémoire.

3. Carte selon la revendication 1 ou la revendication 2, dans laquelle :
la mémoire est une mémoire morte effaçable et programmable électriquement, EEPROM, et le bus de communication est un bus I²C de circuit intégré interne.

4. Système de communication à carte, comprenant un fond de panier (3), un dispositif maître (2) branché dans une fente de dispositif maître (31) sur le fond de panier, et de multiples dispositifs esclaves (1), selon l'une quelconque des revendications 1 à 3, branchés, chacun respectivement dans de multiples fentes de dispositifs esclaves (32) sur le fond de panier.

5. Procédé de communication à carte, **caractérisé en ce que** le procédé comprend les étapes suivantes :
obtenir (601), par l'intermédiaire d'un câble de signal d'adresse, un signal d'adresse correspondant à une fente de dispositif esclave qui accueille un dispositif esclave après que le dispositif esclave a été branché dans une fente de dispositif esclave sur un fond de panier, où le numéro de fente de la fente de dispositif esclave est lié au signal d'adresse correspondant à la fente, et le signal d'adresse correspondant à la fente de dispositif esclave est obtenu par l'intermédiaire du câble de signal d'adresse lorsque le signal en position du dispositif esclave est « actif » après que le dispositif esclave a été branché dans la fente de dispositif esclave ; et
configurer (602) une adresse de validation de sélection de puce de dispositif du dispositif esclave conformément au signal d'adresse, et communiquer par l'intermédiaire d'un bus de communication avec un dispositif maître conformément à l'adresse de validaton de sélection de puce de dispositif ; où l'adresse correspondant à la fente de dispositif esclave dans laquelle le dispositif esclave est branché est configurée comme adresse de validation de sélection de puce de dispositif.
